Europäisches Patentamt

European Patent Office

Office européen des brevets

(19)

(11) EP 0 776 487 B1

(12) **EUROPÄISCHE PATENTSCHRIFT**

(45) Veröffentlichungstag und Bekanntmachung des Hinweises auf die Patenterteilung:
**21.10.1998 Patentblatt 1998/43**

(21) Anmeldenummer: **95929073.5**

(22) Anmeldetag: **03.08.1995**

(51) Int Cl.6: **G01S 7/41**

(86) Internationale Anmeldenummer:
**PCT/EP95/03092**

(87) Internationale Veröffentlichungsnummer:
**WO 96/06366 (29.02.1996 Gazette 1996/10)**

(54) **VERFAHREN ZUR BESTIMMUNG DER POSITION EINES RADARZIELES**

PROCESS FOR DETERMINING THE POSITION OF A RADAR TARGET

PROCEDE DE DETERMINATION DE LA POSITION D'UNE CIBLE DE RADAR

(84) Benannte Vertragsstaaten:
**DE DK ES FR GB NL**

(30) Priorität: **18.08.1994 DE 4429200**

(43) Veröffentlichungstag der Anmeldung:
**04.06.1997 Patentblatt 1997/23**

(73) Patentinhaber: **Daimler-Benz Aerospace Aktiengesellschaft**
**81663 München (DE)**

(72) Erfinder:
- **BODENMÜLLER, Edeltraud**
**D-89179 Beimerstetten (DE)**
- **VOGEL, Siegfried**
**D-89250 Senden (DE)**

(74) Vertreter: **Fröhling, Werner, Dr.**
**Daimler-Benz Aerospace AG**
**Patentabteilung**
**Wörthstrasse 85**
**89077 Ulm (DE)**

(56) Entgegenhaltungen:
**US-A- 5 300 933**

- **IGARSS '90 CONFERENCE PROCEEDINGS, Bd. 1, 20.Mai 1990 MARYLAND, Seiten 691-694, XP 000146335 R. KLEPKO 'automatic ship image extraction from synthetic aperture radar imagery'**
- **RADAR-82 INTERNATIONAL CONFERENCE, 18.Oktober 1982 LONDON, UK, Seiten 274-277, J. MAALOE 'classification of ships using an incoherent marine radar'**

**Beschreibung**

Die Erfindung betrifft ein Verfahren zur Bestimmung der Position eines Radarzieles nach dem Oberbegriff des Patentanspruchs 1. Ein solches Verfahren ist aus der US-A-5 300 933 bekannt.

Der in dieser Patentanmeldung verwendete Begriff "Auflösungszelle" soll sowohl die Begriffe "Radarauflösungszelle" als auch "Gebietsauflösungszelle" enthalten. Eine Radarauflösungszelle bezeichnet die räumliche Auflösung einer Radaranlage. Eine Radarauflösungszelle ist eine bauartbedingte Konstante der Radaranlage. Bei einer Gebietsauflösungszelle werden bedarfsweise mehrere Radarauflösungszellen zusammengefaßt. Eine Gebietsauflösungszelle ist daher räumlich wesentlich größer als eine Radarauflösungszelle.

Die Erfindung betrifft insbesondere die Bestimmung der Position eines großflächigen Radarzieles, wie beispielsweise eines hochseetauglichen Fracht- oder Personenschiffes. Derartige Radarziele umfassen mehrere Auflösungszellen, beispielsweise einige Hundert, wenn sich ein solches Radarziel in einem relativ kleinen Abstand an einem Radargerät vorbeibewegt und/oder wenn das Radargerät eine hohe räumliche Auflösung besitzt. Dieser Zustand ist beispielsweise bei der (Radar-)Überwachung von Hafenzufahrten und/ oder Schiffahrtsstraßen vorhanden. Dort ist es beispielsweise erforderlich, mittels eines ortsfesten Radargerätes die Position von einem oder mehreren Schiffen, die im allgemeinen aufgrund ihrer Gröpe eine geringe Manövrierfähigkeit besitzen, möglichst genau zu bestimmen und zu verfolgen, beispielsweise um die Einhaltung eines vorgegebenen Fahrweges zu überprüfen und/oder um vor einer möglichen Kollision zu warnen.

Derartige Flächenziele, z.B. ein Schiff mit einer Länge von ungefähr 200 m, können aufgrund ihrer Konstruktion, z.B. der Aufbauten und/oder der Ladung, eine Vielzahl von Radarreflektoren besitzen. Ein fahrendes Schiff erzeugt außerdem Bug- sowie Heckwellen (Hecksee), die ebenfalls Radarwellen reflektieren und dadurch das eigentliche Radarziel, das Schiff, in seiner Ausdehnung verändern. Besonders störend für die Bestimmung der Zielposition wirken sich Reflexionen aus, die am Schiff selbst entstehen und mit den Nutzechos verschmelzen. Weiterhin kann eine Radaranlage, beispielsweise aufgrund der sog. Nebenzipfel der Radarantenne, ebenfalls scheinbare Radarziele erzeugen, die sich ebenfalls mit dem eigentlichen Radarziel, dem Schiff, mitbewegen können.

Soll nun bei einer solchen (Radar-)Situation allein aufgrund der Radarinformation die Position eines (Radar-)Flächenzieles, beispielsweise des Schiffes, genau bestimmt werden, z.B. mit dem an sich möglichen räumlichen Auflösungsvermögen der Radaranlage von beispielsweise einem Zehntel der Schiffslänge, so ist es zunächst erforderlich, bei dem gewünschten Radarziel, dem Schiff, einen charakteristischen (Radar-)Bezugspunkt zu finden und dessen Position dann zeitlich fortlaufend zu verfolgen.

Es ist nun naheliegend, für diesen (Radar-)Bezugspunkt den Reflektor mit der größten (Radar-)Echoamplitude auszuwählen. Dieses Verfahren versagt in nachteiliger Weise, wenn mehrere gleichwertige Reflektoren und/oder scheinbare Reflektoren eng benachbart angeordnet sind.

Es ist weiterhin naheliegend, bei einem großflächigen Radarziel, das aus mehreren tatsächlichen und/ oder scheinbaren Einzelzielen zusammengesetzt ist, durch Mittelbildung und/oder Integrationsverfahren einen Flächenmittelpunkt oder Flächenschwerpunkt des Radarzieles als charakteristischen Bezugspunkt zu bestimmen und zu verfolgen. Ein derartig bestimmter Bezugspunkt kann in nachteiliger Weise seine Position ebenfalls stark ändern und somit eine Positionsänderung des eigentlichen Zieles, beispielsweise des Schiffes, vortäuschen. Ein derartiger Fall tritt beispielsweise dann auf, wenn sich die Hecksee eines Schiffes stark ändert, z.B. infolge einer Geschwindigkeitsänderung des Schiffes. In einem solchen Fall ist eine starke Änderung der der Hecksee zuzuordnenden Radarreflexion vorhanden, die durch die erwähnte Mittel- und/oder Integralbildung die (Radar-)Position des (Radar-)Flächenzieles in störender Weise ändern. Ähnliche Probleme entstehen durch aspektabhängige Reflexionen am Schiff selbst.

Der Erfindung liegt die Aufgabe zugrunde, ein gattungsgemäßiges Verfahren anzugeben, mit dem bei einem großflächigen Radarziel eine zuverlässige Bestimmung eines dem Radarziel zuzuordnenden Bezugspunktes möglich wird.

Diese Aufgabe wird gelöst durch die im kennzeichnenden Teil des Patentanspruchs 1 angegebenen Merkmale. Vorteilhafte Ausgestaltungen und/oder Weiterbildungen sind den weiteren Ansprüchen entnehmbar.

Ein erster Vorteil der Erfindung besteht darin, daß der ermittelte (Radar-)Bezugspunkt stabil ist bezüglich der (Radar-)Form des (Radar-)Flächenzieles. Dieses kann sich daher bewegen, ohne daß der Bezugspunkt in störender Weise springt, d.h. schnelle scheinbare räumliche Änderungen vortäuscht. Es wird also gewährleistet, daß eine zuverlässige Spurverfolgung (Tracking) eines Zieles möglich wird.

Ein zweiter Vorteil besteht darin, daß der Bezugspunkt bei den erwähnten größeren Schiffen im wesentlichen der tatsächlichen Schiffsmitte entspricht, so daß die Positionsbestimmung mittels des Bezugspunktes in zuverlässiger Weise der tatsächlichen Position, die immer für die Schiffsmitte angegeben wird, entspricht.

Weitere Vorteile ergeben sich aus der nachfolgenden Beschreibung.

Die Erfindung wird im folgenden anhand von Ausführungsbeispielen näher erläutert.

Die Erfindung basiert auf der Auswertung von demodulierten Radar-Echosignalen im Basisband, z.B.

dem Videoband. Dort werden die einem Radarziel sowie einer Auflösungszelle zugeordneten Echosignale als amplitudenmodulierte Signale dargestellt, d.h. einem guten (Radar-)Reflektor wird ein großer Amplitudenwert zugeordnet. Es ist zweckmäßig, die Gröpe der Auflösungszellen wesentlich kleiner, z.B. zehnmal kleiner, zu wählen als die Größe des zu erwartenden Radarzieles, z.B. eines Schiffes. Damit wird eine gute (Radar-)Darstellung des Radarzieles erreicht.

Enthält nun ein vorgebbares Gebiet, das aus einer Vielzahl von Auflösungszellen zusammengesetzt ist, ein großflächiges Radarziel, z.B. ein Schiff, so wird ein dieses bestimmender Bezugspunkt vorteilhafterweise mittels des nachfolgend beschriebenen SGS-Verfahrens (Schwerpunkt-Verfahren mit Hilfe einer Geordneten Statistik) ermittelt. Dieser Bezugspunkt entspricht bei einem Schiff vorteilhafterweise der Schiffsmitte. Bei dem SGS-Verfahren werden aus dem Gebiet zunächst diejenigen Auflösungszellen mit den M größten Amplituden ausgewählt, wobei M eine vorgebbare ganze positive Zahl ist. Diese Auswahl der M größten Amplituden ist in unterschiedlicher Weise möglich. Beispielsweise können die Amplituden aus dem gesamten Gebiet oder lediglich aus einem räumlich begrenzten Teilgebiet, das beispielsweise eine streifenförmige Form besitzt, ausgewählt werden. Letztere kann beispielsweise die Radardarstellung eines Schiffes, einschließlich aller Reflexionen, sowie die zugehörigen Bug- und Heckwellen umfassen. Bei der Auswahl dieser M größten Amplituden bleibt in jedem Fall die Zuordnung zu der jeweiligen Auflösungszelle erhalten.

Die Bestimmung der größten Amplituden erfolgt vorzugsweise dadurch, daß der Entfernungsbereich und der Azimutbereich des Radarüberwachungsgebietes für eine digitale Datenverarbeitung quantisiert werden. Jedes Echo ist vollständig charakterisiert durch Amplitude, Entfernung und Azimut. In jedem Entfernung-Quantum exisitert ein Wanderfenster-Detektor für das Zielerkennungskriterium und ein azimutal angeordnetes Maximum-Fenster zur Bestimmung des Amplitudenmaximums in diesem Entfernungsquantum. Bei mehreren gleich hohen Amplituden in einem Entfernungs-Quantum existiert keine eindeutige maximale Amplitude. Dann ist die mittlere Position aller gleichen Amplituden relevant. Dieser mittleren Position wird die maximale Amplitude zugeordnet. Für alle derart ermittelten maximalen Amplituden werden die mittleren Positionen gebildet und daraus, mittels der Geordneten Statistik, eine Amplituden-Rangfolge, die in einer Liste abgespeichert wird. Danach wird die größte vorkommende Amplitude in der Liste ausgewählt.

Ausgehend von diesem (absolut) größten Amplitudenwert werden nun die nächst kleineren maximalen Amplituden ausgewählt, und zwar M - 1 Stück. Diese wurden ebenfalls mittels des Geordneten Statistik-Verfahrens ermittelt.

Diese Ermittlung der M größten Amplituden sowie der zugehörigen Auflösungszellen eines Flächenzieles wird bei jedem Umlauf der Radarantenne oder einem damit vergleichbaren Schwenkvorgang der Antennenkeule vorgenommen.

Verläßt nun die Antennenkeule bei dem Schwenkvorgang das Flächenziel F, so wird für dieses ein Bezugspunkt mit der Entfernungs-Koordinate E(F) sowie der Azimut-Koordinate AZ(F) gebildet gemäß den Formeln

$$E(F) = S(E)/M \text{ sowie } AZ(F) = S(AZ)/M.$$

Dabei bedeuten

S(E) = Summe aller Entfernungen, gemessen von der Radarantenne, der Auflösungszellen, welche den M ausgewählten Amplituden zugeordnet sind;

S(AZ) = Summe aller Azimut-Werte, welche den M ausgewählten Auflösungszellen zugeordnet sind;

M = Anzahl der Auflösungszellen = Anzahl der ausgewählten Amplitudenwerte.

Ein derart ermittelter Bezugspunkt ist in vorteilhafter Weise stabil, d.h. der (Radar-)Form (Form eines Flächenziels auf einem Radarschirm) eines Flächenziels zugeordnet, und damit weitgehendst unabhängig von der Zeit (Anzahl der Schwenkvorgänge der Antennenkeule). Ein solcher Bezugspunkt kann daher zuverlässig für die Positionsbestimmung sowie die Spurverfolgung eines Flächenzieles verwendet werden. Es ist besonders vorteilhaft, daß bei einem größeren Schiff ein derart ermittelter Bezugspunkt der Schiffsmitte entspricht. Dadurch wird eine zuverlässige Spurverfolgung möglich.

Das beschriebene Verfahren ist nicht auf die Anwendung zur Überwachung des Schiffsverkehrs beschränkt, sondern in vielfältiger Weise auf weitere (Radar-)Ziele anwendbar. Beispielsweise kann die Größe einer Auflösungszelle entsprechend der Größe des Flächenzieles und/oder der Genauigkeit des Ortes des zu bestimmenden Bezugspunktes gewählt werden. Es ist beispielsweise zweckmäßig, die Zahl M als eine einstellbare Variable zu wählen, die empirisch ermittelt wird. Bei hochauflösenden Radaranlagen wird M größer gewählt als bei niedrig auflösenden Radaranlagen. Weiterhin ist M abhängig von der absoluten Höhe der Amplituden(werte) der Echosignale. Beispielsweise sollte bei einem Flächenziel, dem kleine Amplituden zugeordnet werden, die Zahl M kleiner sein als bei einem gleich großen Flächenziel, das dagegen größere Echoamplituden erzeugt, d.h. einen besseren Radarreflektor darstellt.

Die Erfindung ist daher nicht auf die beschriebenen Beispiele beschränkt, sondern sinngemäß auf alle (Radar-)Flächenziele anwendbar, bei denen ein Bezugspunkt zur Ermittlung der Position und/oder der Bewegung (Spur) erforderlich ist.

## Patentansprüche

1. Verfahren zur Bestimmung der Position eines Radarzieles, das sich über mehrere Auflösungszellen erstreckt, wobei

   - aus Auflösungszellen reflektierte Echosignale in das Basisband gemischt werden, so daß von dem Radarziel ein amplitudenmoduliertes Signal entsteht,
   - im Basisband zumindest zu allen einem Radarziel zuzuordnenden Auflösungszellen die Amplitudenwerte bestimmt werden und
   - aus der Größe der Amplitudenwerte und/oder deren Verteilung in dem durch die Auflösungszelle bestimmten Gebiet die Position des Radarzieles bestimmt wird,

   dadurch gekennzeichnet,

   - daß in einem vorgebbaren Gebiet jeder zugehörigen Auflösungszelle, aus der mindestens ein Echosignal empfangen wird, ein diesem entsprechender Amplitudenwert bestimmt wird,
   - daß aus den Amplitudenwerten einer Auflösungszelle ein dieser zugeordneter maximaler Amplitudenwert ermittelt wird,
   - daß aus den maximalen Amplitudenwerten aller Auflösungszellen die M größten Amplitudenwerte ausgewählt werden, wobei M eine vorgebbare ganze positive Zahl bedeutet,
   - daß für die M größten Amplitudenwerte die Koordinaten (E, AZ) der zugehörigen Auflösungszellen ermittelt werden,
   - daß aus den Koordinaten (E, AZ) die zugehörigen Mittelwerte (E(F), AZ(F)) gebildet werden und
   - daß die Mittelwerte (E(F), AZ(F)) die Koordinaten eines Bezugspunktes bilden, welcher die Position des Radarzieles bestimmt.

2. Verfahren nach Anspruch 1, dadurch gekennzeichnet, daß zumindest die M größten Amplitudenwerte durch ein Geordneten-Statistik-Verfahren ermittelt werden.

3. Verfahren nach Anspruch 1 oder Anspruch 2, dadurch gekennzeichnet, daß der maximale Amplitudenwert einer Auflösungszelle durch ein Integrationsverfahren, bei dem alle der Auflösungszelle zuzuordnenden Amplituden addiert werden, ermittelt wird.

4. Verfahren nach einem der vorhergehenden Ansprüche, dadurch gekennzeichnet, daß die Zahl M in Abhängigkeit von der Größe einer Auflösungszelle und/oder der Größe der maximalen Amplitudenwerte gewählt wird.

5. Verfahren nach einem der vorhergehenden Ansprüche, dadurch gekennzeichnet, daß die Größe (Fläche, Volumen) einer Auflösungszelle in Abhängigkeit von der Größe des Radarzieles gewählt wird, derart, daß die Größe der Auflösungszelle wesentlich kleiner ist als diejenige des Radarzieles.

6. Verfahren nach einem der vorhergehenden Ansprüche, dadurch gekennzeichnet, daß als Radarziel ein Schiff gewählt wird und daß der Bezugspunkt als Schiffsmitte festgesetzt wird.

## Claims

1. Method of determining the position of a radar target which extends over several resolution cells, wherein

   - echo signals reflected from resolution cells are mixed in the base band so that an amplitude-modulated signal arises from the radar target,
   - at least the amplitude values for all resolution cells associated with a radar target are determined in the base band and
   - the position of the radar target is determined from the magnitude of the amplitude values and/or the distribution thereof in the field determined by the resolution cells,

   characterised thereby

   - that in a predeterminable field of each associated resolution cell, from which at least one echo signal is received, an amplitude value corresponding thereto is determined,
   - that from the amplitude values of a resolution cell a maximum amplitude value associated therewith is ascertained,
   - that from the maximum amplitude values of all resolution cells the M largest amplitude values are selected, wherein M signifies a predeterminable integral positive number,
   - that for the M largest amplitude values the coordinates (E, A2) of the associated resolution cells are ascertained,

that from the co-ordinates (E, A2) the associated mean values (E(F), A2(F)) are formed and

that the mean values (E(F), A2(F)) form the co-ordinates of a reference point which determines the position of the radar target.

2. Method according to claim 1, characterised thereby that at least the M largest amplitude values are ascertained by a systematic statistical method.

3. Method according to claim 1 or claim 2, characterised thereby that the maximum amplitude value of a resolution cell is ascertained by an integration method in which all amplitudes to be associated with the resolution cell are added.

4. Method according to one of the preceding claims, characterised thereby that the number M is selected in dependence on the size of a resolution cell and/or the magnitude of the maximum amplitude value.

5. Method according to one of the preceding claims, characterised thereby that the size (area, volume) of a resolution cell is selected in dependence on the size of the radar target in such a manner that the size of the resolution cell is substantially smaller than that of the radar target.

6. Method according to one of the preceding claims, characterised thereby that a ship is selected as radar target and that the reference point is established as the ship centre.

**Revendications**

1. Procédé de détermination de la position d'une cible radar qui s'étend sur plusieurs volumes de confusion, dans lequel

   - on mélange des échos en bande de base, réfléchis en provenance de volumes de confusion, de façon qu'un signal modulé en amplitude provienne de la cible radar,
   - on détermine en bande de base les valeurs de l'amplitude pour tous les volumes de confusion correspondant à une cible radar et,
   - on détermine la position de la cible radar à partir de la valeur des amplitudes et/ou de leur répartition dans le territoire déterminé par les volumes de confusion,

   caractérisé par le fait

   - que dans un territoire à prescrire de chaque volume de confusion correspondant en provenance duquel on reçoit au moins un écho, on établit une valeur de l'amplitude correspondant à cet écho,

   - qu'à partir des valeurs des amplitudes d'un volume de confusion on établit une valeur maximale de l'amplitude correspondant à ce volume,
   - qu'à partir des valeurs maximales d'amplitude de tous les volumes de confusion, on choisit les M plus grandes valeurs d'amplitude, M étant un entier positif à prescrire,
   - que pour les M plus grandes valeurs d'amplitude on détermine les coordonnées (E, AZ) des volumes de confusion correspondants,
   - qu'à partir des coordonnées (E, AZ) on forme les valeurs moyennes correspondantes (E(F), AZ(F)) et
   - que les valeurs moyennes (E(F), AZ(F)) forment les coordonnées d'un point de référence qui détermine la position de la cible radar.

2. Procédé selon la revendication 1, caractérisé par le fait que l'on détermine au moins les M plus grandes valeurs d'amplitude par un procédé de statistique ordonnée.

3. Procédé selon la revendication 1 ou la revendication 2, caractérisé par le fait que l'on détermine la valeur maximale d'amplitude d'un volume de confusion par un procédé d'intégration dans lequel on additionne toutes les amplitudes correspondant au volume de confusion.

4. Procédé selon l'une des revendications précédentes, caractérisé par le fait que l'on choisit le nombre M en fonction de la grandeur d'un volume d'un confusion et/ou de la grandeur des valeurs maximales d'amplitude.

5. Procédé selon l'une des revendications précédentes, caractérisé par le fait que l'on choisit la grandeur (surface, volume) d'un volume de confusion en fonction de la grandeur de la cible du radar de façon que la grandeur du volume de confusion soit sensiblement inférieure à celle de la cible du radar.

6. Procédé selon l'une des revendications précédentes, caractérisé par le fait que comme cible de radar on choisit un navire et que l'on détermine le point de référence comme le milieu du navire.